# EUROPÄISCHE PATENTSCHRIFT

(11) **EP 3 391 991 B1**
(45) Veröffentlichungstag und Bekanntmachung des Hinweises auf die Patenterteilung: **03.05.2023**
(21) Anmeldenummer: 18000294.1
(22) Anmeldetag: 23.03.2018
(51) Int. Cl.: B23Q 1/00, B23Q 17/00

(54) **SPANNFUTTER**
COLLET CHUCK
MANDRIN

(30) Priorität: 21.04.2017 CH 533172017
(43) Veröffentlichungstag der Anmeldung: 24.10.2018
(73) Patentinhaber: Erowa AG, 5734 Reinach (CH)
(72) Erfinder: HEDIGER, Hans, CH-5734 Reinach (CH)
(74) Vertreter: Hering, Hartmut

(56) Entgegenhaltungen:
- EP-A1- 1 849 556
- EP-A1- 1 998 932
- EP-A1- 2 052 808
- EP-A2- 1 175 959
- DE-A1- 2 759 372
- DE-A1-102005 052 780
- DE-B3-102013 009 021

## Beschreibung

Die vorliegende Erfindung bezieht sich auf ein gemäss dem Oberbegriff des Anspruchs 1 ausgebildetes Spannfutter.

Spannfutter der hier zur Rede stehenden Art dienen dem positionsdefinierten Festspannen von Paletten bzw. Werkstückträgern. Dabei wird das jeweilige Spannfutter üblicherweise fest auf dem Maschinentisch einer Bearbeitungsmaschine montiert, während die Palette wiederholbar genau an dem Spannfutter festspannbar ist. Während die Palette mit einem Spannzapfen versehen ist, weist das Spannfutter eine Aufnahmeöffnung und eine Spannvorrichtung zum Festspannen des Spannzapfens in der Aufnahmeöffnung auf. Die Palette trägt zumeist ein zu bearbeitendes Werkstück oder Werkzeug.

Um ein solches Spannfutter bei halb- oder vollautomatisch ablaufenden Arbeitsprozessen einsetzen zu können, muss die Palette dem Spannfutter mittels eines Handlingroboters zugeführt und auch wieder daraus entfernt werden können. Dabei ist es wichtig, dass die Palette mit einer Mindestspannkraft am Spannfutter festgespannt wird und die Spannorgane des Spannfutters vor dem Entfernen der Palette auch wieder vollständig gelöst bzw. entriegelt sind. Ist die Palette beispielsweise nicht korrekt am Spannfutter fixiert, so besteht die Gefahr von Vibrationen oder sogar, dass sich diese bei der mechanischen Bearbeitung des daran festgespannten Werkstücks, beispielsweise während eines Fräsvorgangs, löst, was zu erheblichen Folgeschäden führen kann. Soll der Werkstückträger nach dem Bearbeitungsvorgang von dem Spannfutter abgehoben werden, so muss wiederum sichergestellt sein, dass der Verriegelungsmechanismus vollständig entriegelt, also komplett gelöst ist, so dass der Werkstückträger ohne Folgeschäden vom Spannfutter abgehoben werden kann. Es versteht sich, dass das Abheben eines Werkstückträgers bei nicht vollständig entriegelten Spannelementen ebenfalls zu Folgeschäden mit erheblicher Kostenfolge führen kann.

Aus der EP 2 052 808 A1, die die Basis für den Oberbegriff des Anspruchs 1 bildet, ist eine Spanneinrichtung mit einem Spannfutter zum lösbaren Fixieren eines Werkstückträgers bekannt. Das Spannfutter ist mit einem Verriegelungsmechanismus versehen, der mehrere Spannelemente umfasst, welche in der Verriegelungsstellung an einem mit dem Werkstückträger verbundenen Spannzapfen angreifen. Jedes Spannelement ist mit einer Durchgangsbohrung versehen, welche bei korrekter Verriegelung des jeweiligen Spannelements einseitig verschlossen ist. Zusätzlich oder alternativ ist jedem Spannelement ein mit einer Durchgangsbohrung versehenes Betätigungselement zugeordnet, dessen Durchgangsbohrung bei korrekter Verriegelung und/oder Entriegelung des zugehörigen Spannelements einseitig verschlossen ist. Die Durchgangsbohrungen der Spannelemente bzw. der Betätigungselemente sind über eine gemeinsame Verbindungsleitung mit einer pneumatischen Quelle verbunden. In der Verbindungsleitung ist zumindest ein Sensor zum Erfassen der Luftströmung vorgesehen. Mittels des Sensors kann erkannt werden, ob die Spannelemente korrekt entriegelt bzw. verriegelt wurden. Der Sensor ist mit einer elektronischen Steuer- und Auswertevorrichtung verbunden.

Obwohl sich eine derartige Spanneinrichtung in der Praxis bewährt hat, wäre es wünschenswert, wenn der oder die mittels eines Sensors oder mehreren Sensoren erfassten Parameter/Daten für die Erfassung, Auswertung oder Weiterverarbeitung auf einfache Weise an eine Übergabestelle weitergeleitet werden könnten.

Die EP 1 175 959 A2 offenbart eine Schnellspanneinheit zum Festspannen eines Spannzapfens. Diese umfasst ein mit einer Bohrung versehenes Gehäuse. Die genannte Bohrung weist zwei unterschiedliche Durchmesser auf, wobei ein Kolben gleitend in die Bohrung eingefügt ist. Der Kolben besitzt eine abgestufte Bohrung, in die der Spannzapfen und darunter eine Buchse einfügbar sind. Auf der Unterseite des Kolbens ist ein Schalter 15 angeordnet, mittels welchem das Ende des Spannvorgangs überwacht werden kann. In einem Druckluftkanal ist ein weiterer Sensor angeordnet, mittels welchem der Spannzustand ebenfalls erfassbar sein soll.

Des Weiteren ist aus der EP 2 759 372 A1 eine Spanneinrichtung für eine Werkzeugmaschine bekannt. Die Werkzeugmaschine weist eine drehbare Spindel mit einer Werkzeugaufnahme für ein Werkzeug auf. Zum Festspannen des Werkzeugs ist eine Spanneinrichtung vorgesehen. Um ein korrektes bzw. nicht korrektes Festspannen des Werkzeugs in der Werkzeugaufnahme zu erkennen, weist die Spanneinrichtung an unterschiedlichen Messorten Kraft-Sensoren auf, um die jeweils an unterschiedlichen Messorten wirkenden Spannkräfte zu Erfassen. Die Kraft-Sensoren sind an einer ringförmigen Anlagefläche der Werkzeugaufnahme angeordnet. Die Sensoren stehen dabei derart über die Anlagefläche vor, dass sie beim Festspannen des Werkzeugs zusammengedrückt werden. Auf diese Weise soll einerseits die Spannkraft erfasst werden können und es soll erkannt werden, ob das Werkzeug korrekt gespannt ist oder ob ggf. eine Fehlausrichtung und/oder Fehlpositionierung vorliegt. Als Kraft-Sensoren kommen AOW-Sensoren (akustische Oberflächenwellen-Sensoren) zum Einsatz. Die Kraft-Sensoren sind an der Anlagefläche drehsymmetrisch um die Mittelachse der Werkzeugmaschine angeordnet. Bei korrekter Ausrichtung des Werkzeugs erfassen die Kraft-Sensoren gleichgrosse Spannkräfte, während bei einem schräg eingespannten Werkzeug unterschiedlich grosse Spannkräfte von den Kraft-Sensoren erfasst werden. Die elektrischen Signale der Sensoren werden drahtlos an eine Sende- und Empfangseinheit übertragen und in einer Auswerteeinheit ausgewertet.

Aus der DE 10 2005 052 780 A1 ist ein Schnellspann-Zylinder mit Verriegelungskontrolle bekannt. Der Schnellspann-Zylinder ist mit einer zentralen Ausnehmung zur Aufnahme eines an einer Palette angeordneten Einzugsnippels versehen. Im Gehäuse des Schnellspann-Zylinders ist eine mit Spannkugeln versehene Verriegelungseinrichtung zum Festspannen des Einzugsnippels angeordnet. Die Spannkugeln werden unter der Kraft eines mittels eines Federpaktes belasteten Verriegelungskolbens in ihre Spannposition gedrückt. Zum Verschieben des Verriegelungskolbens wird ein Druckmedium in einen Druckraum eingeleitet, was den Verriegelungskolben entgegen der Kraft des Federpaktes nach unten presst und die Verriegelungseinrichtung öffnet und dabei die Kugel freigibt. Am Boden des Schnellspann-Zylinders ist ein Kontrollventil angeordnet, mittels welchem der Verschiebungsweg des Federpakets überwacht werden kann. Das Kontrollventil ist derart in eine Kontrollleitung eingebaut, dass anhand des Durchflusses eines Mediums durch die Kontrollleitung erkannt werden kann, ob die Verriegelungseinrichtung ausser Eingriff ist. Auch ein Bruch des Federpakets soll damit erkannt werden können. Der Schnellspann-Zylinder ist auf der Oberseite mit einer zweiten, pneumatisch arbeitenden Kontrolleinrichtung versehen, welche über Düsenschrauben Luft nach oben in Richtung der Palettenunterseite ausbläst. Anhand des Drucks einer in die Düsenschrauben mündenden Luftleitung soll erkannt werden können, ob die Werkstückpalette plan auf dem Schnellspann-Zylinder aufliegt.

Die DE 10 2013 009021 B3 offenbart eine Werkstückspannvorrichtung mit autarker Signalübertragung. Diese umfasst einen Spannkörper zum Festspannen von zwei Werkstücken. Die Positionierung jedes Werkstücks erfolgt mittels eines Zentrierelements, einer Druckfeder und sechs Auf- und Anlageelementen. Im Zentrierelement und in jedem Auf- und Anlageelemente ist je ein Sensor mit Antastbolzen angeordnet. Die Signale der Sensorelemente werden über Kabel an am Spannkörper angeordnete Sender übermittelt. Die Sender übermitteln die genannten Signale als akustische Signale an SignalEmpfänger.

Aufgabe der Erfindung ist es, ein dem eingangs genannten technischen Gebiet zugehörendes Spannfutter zu schaffen, welches ermöglicht, dass ein oder mehrere Parameter, insbesondere solche Parameter, die ein Spannen und/oder Aufliegen und/oder Lösen der Palette überwachen oder signalisieren, zuverlässig erfasst und an einen Empfänger übermittelt werden können, ohne dass dazu Datenleitungen vorhanden sein müssen.

Schliesslich ist aus der EP 1 998 932 B1 ein gattungsfremdes sogenanntes "Dreibackenfutter" bekannt, wie es handelsüblich ist und bei Maschinen mit rotierender Bearbeitung, wie Drehbänken oder Bohrmaschinen beispielsweise zum Einsatz kommt. Die drei Spannbacken (6) des Spannfutters sind in einer konischen Aufnahmeöffnung (5) eines Grundkörpers (4) aufgenommen. Der Grundkörper (4) bildet zusammen mit den drei Spannbacken (6) und einem Zugrohr (9) den eigentlichen Spannmechanismus. Das Spannfutter (3) ist fest mit dem Zugrohr (9) verbunden. Mittels den drei Spannbacken (6) kann ein Werkzeug festgespannt werden, wobei die Spannbacken (6) ausschliesslich eine Radialkraft auf ein eingespanntes Werkzeug ausüben. Eine Positionierung des Werkzeugs in Z-Richtung ist nicht vorgesehen. Dehnungsmessstreifen (12a, 12b, 12c) dienen dem Erfassen von Deformationen der Spannvorrichtung. Ein erster Dehnungsmessstreifen (12a) ist dabei auf der Aussenoberfläche (10) des Grundkörpers (4) angeordnet, während ein zweiter Dehnungsmessstreifen (12b) in einer taschenartigen Vertiefung des Grundkörpers (4) angeordnet ist. Ein dritter Dehnungsmessstreifen (12c) ist an dem Zugrohr (9) angeordnet. Die Dehnungsmessstreifen (12a, 12b, 12c) sind an einem Bauelement der Spannvorrichtung angeordnet, wo Kräfte der Spanneinrichtung direkt einwirken. Jedem Dehnungsmessstreifen (12a, 12b, 12c) ist zudem eine Signalverarbeitungseinheit (16a, 16b, 16c) und eine Informationsübertragungseinrichtung (17a, 17b, 17c) zur drahtlosen Übertragung der Messwerte an eine Empfangseinrichtung mit Signalverarbeitung zugeordnet.

Die Lösung der Aufgabe ist durch die Merkmale des Anspruchs 1 definiert. Gemäss der Erfindung weist das zum Festspannen von mit einem Spannzapfen versehenen Paletten dienende Spannfutter eine Aufnahmeöffnung für den Spannzapfen auf und ist mit einer Spannorgane aufweisenden Spannvorrichtung zum Festspannen des Spannzapfens in der Aufnahmeöffnung versehen, wobei am Spannfutter zumindest ein Sensor angeordnet ist, mittels welchem zumindest ein Parameter des Spannfutters und/oder der Palette und/oder des Zusammenwirkens zwischen Palette und Spannfutter erfassbar ist/sind, wobei das Spannfutter mit einem ersten Sensor versehen ist, mittels welchem die auf den Spannzapfen einwirkende Spannkraft ermittelbar ist und wobei der erste Sensor derart ausgebildet und am Spannfutter angeordnet ist, dass beim Festspannen einer Palette materialelastische Verformungen des Spannfutters messbar sind, und wobei das Spannfutter mit einem Sender zur drahtlosen Übertragung von mittels des Sensors bzw. der Sensoren ermittelten Parametern versehen ist.

Indem das Spannfutter mit einem ersten Sensor versehen ist, mittels welchem die auf den Spannzapfen einwirkende Spannkraft ermittelbar ist kann eine qualitative Aussage in Bezug auf ein korrektes Festspannen der Palette gemacht werden, was im Hinblick auf einen automatisierten Arbeitsablauf vorteilhaft ist und zugleich eine erhöhte Sicherheit gewährleistet. Das weitere Merkmal, dass der erste Sensor derart ausgebildet und am Spannfutter angeordnet ist, dass beim Festspannen einer Palette materialelastische Verformungen des Spannfutters messbar sind, stellt eine besonders einfache Möglichkeit dar, um Rückschlüsse im Hinblick auf die Spannkraft zu ziehen, d.h. diejenige Kraft, mit der die Palette an dem Spannfutter festgespannt ist. Da das Spannfutter zudem mit einem Sender zur drahtlosen Übertragung von mittels des Sensors bzw. der Sensoren ermittelten Parametern versehen ist, können die ermittelten Parameter entfernt vom Spannfutter empfangen und ausgewertet werden, ohne dass dazu Datenleitungen vorhanden sein müssen. Die übermittelten Daten können mittels eines Empfängers empfangen und von dort an beliebig weitere Einrichtungen wie beispielsweise eine elektronische Übergabestelle weitergeleitet werden. Dies ist einerseits im Hinblick auf automatisierte Arbeitsabläufe vorteilhaft, bei denen die Paletten mittels eines Handlingroboters ein- und ausgewechselt werden, da die Messdaten von der Übergabestelle in der Form von Steuerbefehlen an den Roboter übermittelt werden können. Andererseits können relevante Parameter wie beispielsweise das korrekte Festspannen der Palette im Spannfutter kontinuierlich überwacht und/oder ausgewertet und ggf. mit weiteren Parametern verknüpft werden.

Bevorzugte Ausführungsformen und Weiterbildungen der Spanneinrichtung sind in den abhängigen Ansprüchen umschrieben.

Besonders bevorzugt ist das Spannfutter mit einem zweiten Sensor versehen, mittels welchem das Aufliegen einer Palette auf dem Spannfutter erkennbar ist. Das Erkennen des Aufliegens einer Palette auf dem Spannfutter ist wiederum im Hinblick auf einen automatisierten Arbeitsablauf vorteilhaft, da dem Spannfutter damit beispielsweise die Freigabe zum Festspannen der Palette erteilt werden kann.

Bei einer weiteren bevorzugten Weiterbildung ist das Spannfutter mit einem dritten Sensor versehen, mittels welchem die Position eines der Betätigung der Spannorgane dienenden Elements erkennbar ist. Dadurch kann ermittelt werden, ob sich die Spannorgane in der Freigabestellung befinden, was im Hinblick auf einen automatisierten Palettenwechsel wichtig ist, da die Palette nur dann entfernt werden kann oder darf, wenn das genannte Element die Spannorgane nicht in die Spannstellung drückt.
- Fig. 2: das Spannfutter zusammen mit der darin aufgenommenen Palette in einer Ansicht von oben;
- Fig. 3: das abstrahierte Spannfutter in einem Schnitt entlang der Linie A-A in Fig. 2;
- Fig. 4: das Spannfutter in vereinfachter Darstellung zusammen mit der abgehobenen Palette in einem Schnitt entlang der Linie A-A in Fig. 2;
- Fig. 5: das abstrahierte Spannfutter zusammen mit der lose aufgesetzten Palette;
- Fig. 6: das abstrahierte Spannfutter zusammen mit der daran festgespannten Palette;
- Fig. 7: das Spannfutter zusammen mit einem Empfänger, einem Gateway und einem Roboter;

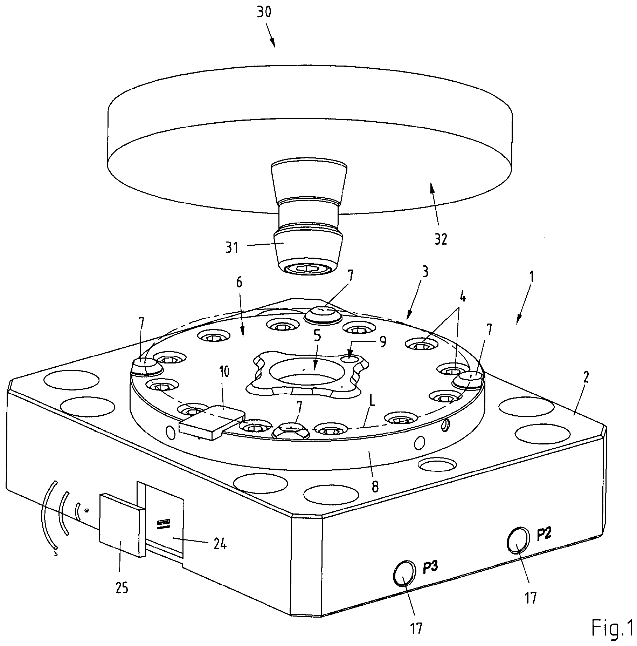

Die Fig. 1 zeigt das Spannfutter 1 zusammen mit einer Palette 30 in perspektivischer Ansicht. Das Spannfutter 1 umfasst im Wesentlichen eine Basisplatte 2 und einen Futterinnenteil 3, während die Palette 30 mit einem Spannzapfen 31 zum Festspannen im Futterinnenteil 3 versehen ist. Der Futterinnenteil 3 ist mittels einer Vielzahl von Befestigungsschrauben 4 mit der Basisplatte 2 verbunden. Der Innenteil 3 des Spannfutters 1 ist mit einer Aufnahmeöffnung 5 für den Spannzapfen 31 versehen. Auf der Oberseite 6 ist der Futterinnenteil 3 mit einer runden Abschlussplatte 8 versehen, auf der vier kreisrunde Auflageflächen 7 angeordnet sind, welche die Z-Auflage für die Palette 30 bilden. Die Z-Auflagen 7 erheben sich über die plane Oberseite 6 des Futterinnenteils 3. Die Palette 30 weist eine plane Unterseite 32 auf, mit welcher sie beim Festspannen am Spannfutter 1 auf den Z-Auflagen 7 zur Anlage kommt. Jede dieser Z-Auflagen 7 ist mit einer Ausblasöffnung versehen. Grundsätzlich verläuft bei einem solchen Spanfutter 1 die X-Y-Ebene parallel zur Oberseite/Oberfläche 6 des Spannfutters 1, während die Z-Richtung unter einem rechten Winkel dazu verläuft. Die Z-Richtung verläuft gleichzeitig parallel zur Längsmittenachse der Aufnahmeöffnung 5. Zum Zentrieren der Palette 30 in X-Y-Richtung sind nicht näher dargestellte Zentriermittel vorgesehen. Der Ausdruck Palette steht hier stellvertretend für jegliche Arten von Trägern, auf welchen beispielsweise ein Werkzeug oder Werkstück befestigt werden kann.

Im Bereich der Oberseite 6 des Spannfutters 1 ist ein erster, schematisch dargestellter Sensor 9 angeordnet, der in einer in die obere Abschlussplatte 8 eingelassenen Bohrung aufgenommen ist. Dieser erste Sensor 9 ist derart ausgebildet und mit dem Spannfutter 1 bzw. der oberen Abschlussplatte 8 verbunden, dass damit materialelastische Verformungen des Spanfutters 1, namentlich der oberen Abschlussplatte 8, gemessen werden können. Der erste Sensor 9 ist mit der Abschlussplatte 8 zumindest kraftschlüssig, vorzugsweise kraft- und stoffschlüssig und ggf. formschlüssig verbunden, vorzugsweise verschweisst oder verklebt. In radialer Richtung ist der erste Sensor 9 zwischen einer die Z-Auflagen 7 schneidenden Kreislinie L und der Aufnahmeöffnung 5 angeordnet.

Auf der Oberseite des Spannfutters 1 ist ein zweiter Sensor 10 angeordnet, mittels welchem das Aufliegen bzw. Vorhandensein einer Palette 30 erkennbar ist. Die Oberseite dieses zweiten Sensors 10 liegt etwas unter der Oberseite der Z-Auflagen 7, so dass eine Palette 30 beim Aufsetzen auf das Spannfutter 1 nicht an dem zweiten Sensor 10 aufliegt. Das Spannfutter 1 weist noch einen dritten Sensor auf, welcher aus dieser Darstellung nicht ersichtlich ist, jedoch nachfolgend noch näher erläutert wird.

Die Basisplatte 2 ist seitlich mit einer Ausnehmung 24 versehen, welche der Aufnahme eines Senders 25 dient. Für die Energieversorgung des Senders 25 sind vorzugsweise Batterien oder Akkus vorgesehen, welche beispielsweise in einem separaten Batteriefach in der Basisplatte 2 untergebracht werden können, wobei weder die Batterien noch das Batteriefach näher dargestellt sind. Ggf. kann auch ein Netzteil oder eine Einrichtung zur Energieumwandlung aus der Umwelt (Energy Harvesting) vorgesehen werden. Die Basisplatte 2 ist zudem mit seitlichen Anschlüssen 17 versehen, über welche Druckluft zum Betätigen der Spannvorrichtung, namentlich zum Öffnen der Spannvorrichtung, zugeführt wird. Die Druckluft kann ausserdem dazu genutzt werden, Auflageflächen mittels abblasen zu reinigen und/oder ein Nachspannen der Spannvorrichtung zu bewirken.

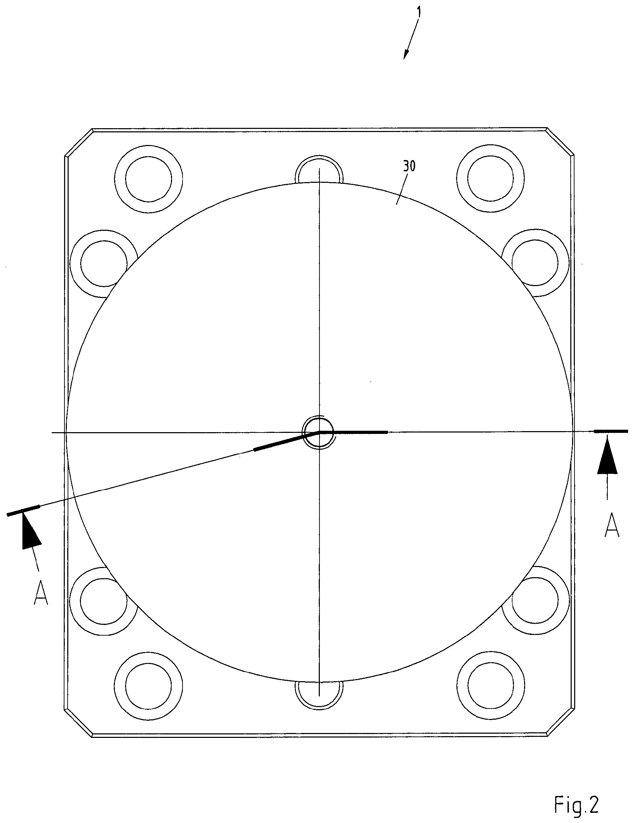

Die Fig. 2 zeigt das Spannfutter 1 zusammen mit der darin aufgenommenen Palette 30 in einer Ansicht von oben. Anhand dieser Darstellung kann erkannt werden, wie der Schnitt A-A für die nachfolgenden Darstellungen verläuft.

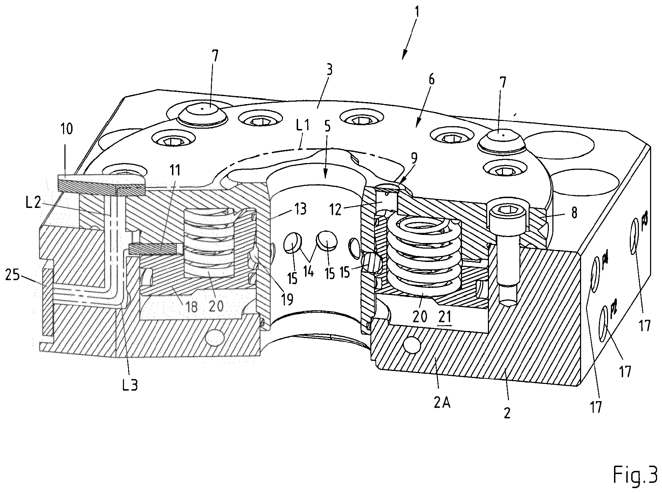

Die Fig. 3 zeigt in perspektivischer Darstellung das Spannfutter 1 in einem Schnitt entlang der Linie A-A in Fig. 2. Da der Aufbau und die Wirkungsweise eines solchen Spannfutters 1 grundsätzlich bekannt sind, beispielsweise aus der EP 1 344 599 A1, wird nachfolgend insbesondere nur auf einige bzw. einige wesentliche Bestandteile des Spannfutters 1 eingegangen. Die zentrale Aufnahmeöffnung 5 des Spannfutters 1 wird durch einen hohlzylindrischen Fortsatz 13 begrenzt, der einstückig mit der Abschlussplatte 8 ausgebildet ist und sich vertikal nach unten in Richtung des Bodens 2A der Basisplatte 2 erstreckt. Das Spannfutter 1 ist mit einer Spannvorrichtung versehen, die im Wesentlichen aus einem mittels Druckfedern 20 belasteten Betätigungskolben 18 und Spannorganen in der Form von Spannkugeln 15 besteht. Der hohlzylindrische Fortsatz 13 ist mit radialen Bohrungen 14 zur Aufnahme der Spannkugeln 15 versehen. Die Spannkugeln 15 sind in axialer bzw. in Z-Richtung an dem hohlzylindrischen Fortsatz 13 abgestützt. Die Betätigung der Spannkugeln, d.h. die radiale Verschiebung der Spannkugeln 15 erfolgt durch den Betätigungskolben 18, der mittels den Druckfedern 20 in Richtung des Bodens 2A der Basisplatte 2 belastet ist. In der Basisplatte 2 ist zudem eine Druckkammer 21 angeordnet, welche zum Verschieben des Betätigungskolbens 18 entgegen der Kraft der Federn 20 mit Druckluft beaufschlagt werden kann.

In dieser Darstellung ist erkennbar, dass der erste Sensor 9 in einer in die Abschlussplatte 8 eingelassenen Bohrung 12 aufgenommen ist. Neben dem zweiten Sensor 10 ist zudem ein dritter Sensor 11 erkennbar, der auf der Unterseite der oberen Abschlussplatte 8 des Spannfutters 1 angeordnet ist. Dieser dritte Sensor 11 dient dazu, die Lage des Betätigungskolbens 18 zu erkennen.

Der erste Sensor 9 ist derart ausgebildet und mit dem Spannfutter 1 bzw. der oberen Abschlussplatte 8 verbunden, dass damit materialelastische Verformungen des Spanfutters 1, namentlich der oberen Abschlussplatte 8, gemessen werden können. Zudem ist erkennbar, dass der erste Sensor 9 radial ausserhalb der Aufnahmeöffnung 5 jedoch innerhalb der Z-Auflagen 7 angeordnet ist.

Der zweite und dritte Sensor 10, 11 sind vorzugsweise induktiv arbeitende Sensoren in der Form von induktiven Näherungsschaltern, mittels denen die Position einer Palette bzw. des Betätigungskolbens 18 detektierbar ist. Der erste Sensor 9 ist vorzugsweise ein Sensor auf der Basis von Dehnungsmessstreifen, nachfolgend DMS-Sensor genannt, mittels welchem materialelastische Verformungen des Spannfutters 1 gemessen und damit qualitative Aussagen in Bezug auf das Festspannen einer Palette an dem Spannfutter 1 gemacht werden können, wie nachfolgend noch näher erläutert wird. Jeder der drei Sensoren 9, 10, 11 ist über eine elektrische Leitung L1, L2, L3 mit dem Sender 25 verbunden, wobei die genannten drei Leitungen L1, L2, L3 nur schematisch angedeutet sind. Der Sender 25 dient insbesondere der drahtlosen Übermittlung der an den Sensoren 9, 10, 11 anstehenden Signale. Obwohl hier vereinfacht nur jeweils von Sender gesprochen wird, umfasst der Sender 25 vorzugsweise auch eine Mikroprozessorsteuerung, mittels welcher die Sensorsignale aufbereitet und ggf. mit weiteren Informationen wie beispielsweise dem Batteriezustand angereichert werden. Die aufbereiteten Sensorsignale werden mittels des Senders 25 drahtlos übertragen.

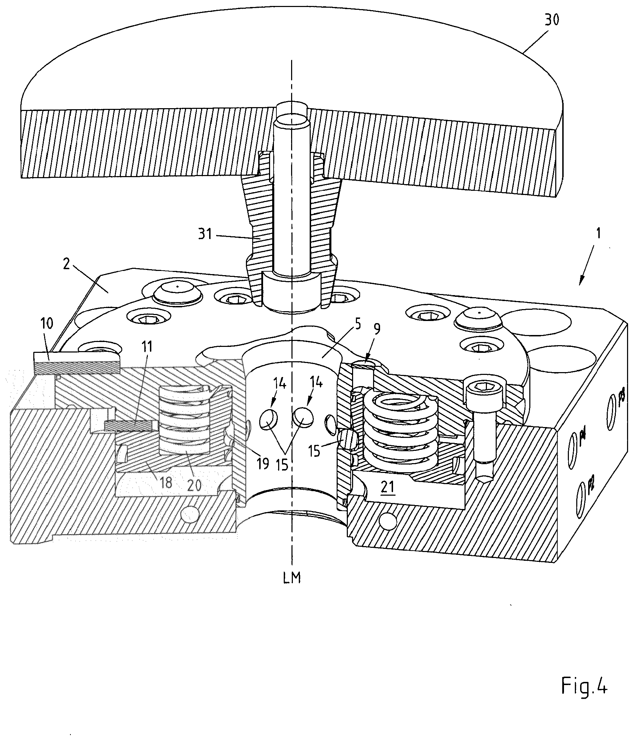

Die Fig. 4 zeigt das Spannfutter 1 zusammen mit der abgehobenen Palette 30 in einem Schnitt entlang der Linie A-A in Fig. 2, wobei der Sender und die Verbindungsleitungen nicht dargestellt sind. Damit der Spannzapfen 31 soweit in die Aufnahmeöffnung 5 eingeführt werden kann, dass er darin festgespannt werden kann, muss der Betätigungskolben 18 in die in Fig. 4 dargestellte obere Position -Ausgangsstellungverschoben sein. Dazu wird die Druckkammer 21 pneumatisch mit einem entsprechenden Überdruck beaufschlagt. Dadurch können die Spannkugeln 15 soweit radial nach aussen verschoben werden, dass sie sich in eine durch eine umlaufenden Ringnut gebildete Vertiefung 19 des Betätigungskolbens 18 erstrecken. Auch wenn sich die Spannkugeln 15 beim Einführen des Spannzapfens 31 ggf. noch in die Aufnahmeöffnung 5 erstrecken, werden sie von dem Spannzapfen 31 quer zur Längsmittenachse LM zurückgedrängt.

in der Darstellung gemäss Fig. 4 wird mittels des dritten Sensors 11 erkannt, dass sich der Betätigungskolben 18 in seiner oberen Position befindet, während der zweite Sensor 10 erkennt, dass keine Palette 30 auf dem Spannfutter 1 aufliegt. Somit liegt an dem dritten Sensor 11 ein Signal "1" an, während an dem zweiten Sensor 10 ein Signal "0" ansteht. An dem ersten Sensor 9 liegt ein Signal an, welches proportional zu der Verformung des Spannfutters 1 ist. Die anstehenden Signale werden mittels des Senders drahtlos an einen Empfänger (nicht dargestellt) übermittelt. Der Empfänger kann beispielsweise Teil einer Maschinensteuerung sein, über welche ein Handlingroboter (nicht dargestellt) angesteuert wird. Aufgrund der an den drei Sensoren 9, 10, 11 anstehenden und an den Empfänger übermittelten Signale kann der Ist-Zustand des Spannfutters 1 erkannt werden. Im vorliegenden Fall wird erkannt, dass sich das Spannfutter 1 in der Offenstellung befindet, jedoch keine Palette 30 aufgelegt und auch keine Palette darin festgespannt ist. Somit kann dem Handlingroboter eine Freigabe zur Übergabe einer Palette 30 an das Spannfutter 1 erteilt werden.

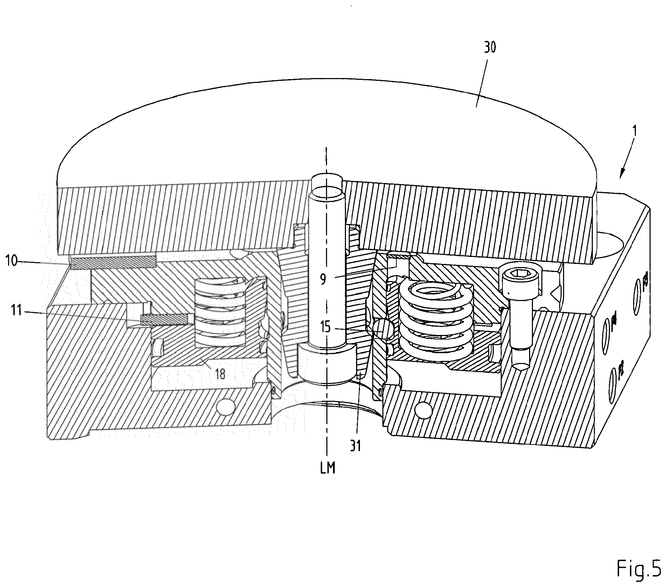

Die Fig. 5 zeigt das Spannfutter 1 zusammen mit der aufgesetzten aber nicht im Spannfutter 1 festgespannten Palette 30 in einem Schnitt entlang der Linie A-A in Fig. 2. Die Palette 30 liegt lose, d.h. mit ihrem Eigengewicht und dem Gewicht von einem allenfalls darauf befestigten Werkstück oder Werkzeug auf dem Spannfutter 1 auf. Der Betätigungskolben 18 verharrt noch immer in seiner oberen Position, in der die Spannkugeln 15 radial nach aussen geschoben sind. Dadurch wird noch keine Spannkraft von den Spannkugeln 15 auf den Spannzapfen 31 ausgeübt. Mittels des zweiten Sensors 10 wird erkannt, dass die Palette 30 auf dem Spannfutter 1 aufliegt, während der dritte Sensor 11 wiederum erkennt, dass sich der Betätigungskolben 18 in seiner oberen Position befindet. Somit liegt an dem zweiten Sensor 10 wie auch an dem dritten Sensor 11 ein Signal "1" an. An dem ersten Sensor 9 liegt wiederum ein Signal an, welches proportional zu der Verformung des Spannfutters 1 ist. Wenn die Palette 30 lose auf dem Spannfutter 1 aufliegt, findet noch keine messbare oder nennenswerte Verformung des Spannfutters 1 statt, was anhand des an dem ersten Sensor 9 anliegenden Signals erkennbar ist. Aufgrund der anliegenden Signale kann dem Spannfutter 1 die Freigabe zum Festspannen der Palette 30 erteilt werden.

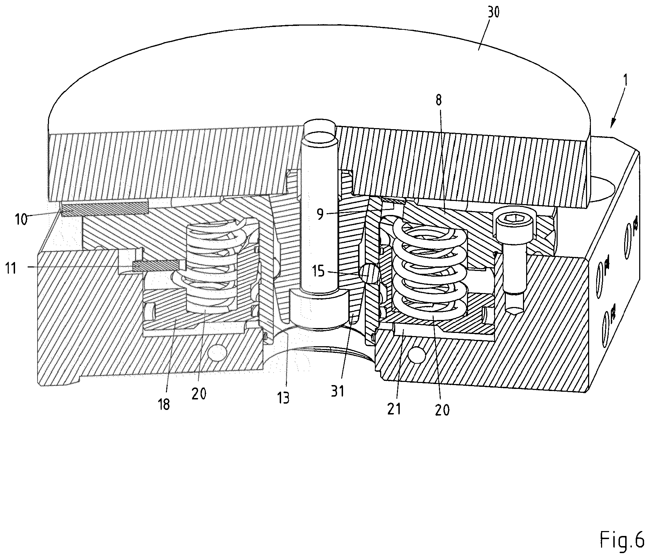

Die Fig. 6 zeigt das Spannfutter 1 zusammen mit der daran festgespannten Palette 30 in einem Schnitt entlang der Linie A-A in Fig. 2. Um die Palette 30 an dem Spannfutter 1 festzuspannen, muss der in der Druckkammer 21 herrschende Überdruck abgebaut werden. Sobald ein bestimmter Mindestdruck in der Druckkammer 21 unterschritten wird, wird der Betätigungskolben 18 unter der Wirkung der Druckfedern 20 nach unten gedrückt.

Dabei werden die Spannkugeln 15 durch den Betätigungskolben 18 nach innen gedrückt. Die Spannkugeln 15 legen sich dabei an einer Schulter des Spannzapfes 31 an, wodurch dieser etwas weiter in die Aufnahmeöffnung hineingezogen und darin festgespannt wird. Die Palette 30 kommt dabei mit ihrer Unterseite unverrückbar auf den Z-Auflagen des Spannfutters 1 zur Anlage. Unter der Wirkung der am Spannzapfen 31 angreifenden Spannkugeln 15 verformt sich das Spannfutter 1. Da die Palette 30 im Bereich ihrer Aussenseite auf den Z-Auflagen aufliegt, wird die Abschlussplatte 8 im Bereich der Mitte durch die an dem hohlzylindrischen Fortsatz 13 in axialer Richtung abgestützten Spannkugeln 15 nach oben in Richtung der aufliegenden Palette 30 gedrückt. Dadurch verformt sich das Spannfutter 1 bzw. die Abschlussplatte 8 insbesondere im mittleren Bereich materialelastisch, was mittels des ersten Sensors 9 gemessen werden kann. In der Figur 6 ist diese Verformung übertrieben dargestellt. Es versteht sich, dass sich auch andere Bereiche des Spannfutters 1 beim Festspannen der Palette 30 materialelastisch verformen. Jedoch haben Versuche ergeben, dass sich der Bereich, in dem der erste Sensor 9 angeordnet ist, in besonders vorteilhafter Weise eignet, um die materialelastische Verformung des Spannfutters 1 zu messen und Rückschlüsse auf die Einzugskraft zu ziehen. Als Spann- bzw. Einzugskraft wird diejenige Kraft bezeichnet, mit der der Spannzapfen 31 nach unten, d.h. in die Aufnahmeöffnung hineingezogen wird. Aufgrund der gemessenen materialelastischen Verformung kann einerseits die Einzugskraft relativ genau bestimmt werden. Andererseits kann auch eine Aussage gemacht werden, ob die Palette 30 korrekt und mit genügender Spannkraft an dem Spannfutter 1 festgespannt ist. Jedenfalls liefert der erste Sensor 9 ein zur Spannkraft zumindest annähernd proportionales Ausgangssignal. Diesbezügliche Versuche haben ergeben, dass die Spannkraft mit einer Genauigkeit in der Grössenordnung von 0,3 kN, bei einer Spannkraft in der Grössenordnung von 15 kN, ermittelt werden. Natürlich ist die Spannkraft abhängig von der Ausbildung und Grösse des Spannfutters. Bei grossen Spannfuttern kann die Spannkraft durchaus ein Mehrfaches der angegeben 15 kN betragen, während bei kleineren Futtern auch entsprechend geringere Spannkräfte erzeugt werden. Unabhängig von der Spannkraft können mit einem DMS-Sensor der genannten Art jedoch hohe Auflösungen erzielt werden, so dass letztlich die absolute Spannkraft mit einer hohen Auflösung und Genauigkeit ermittelt werden kann.

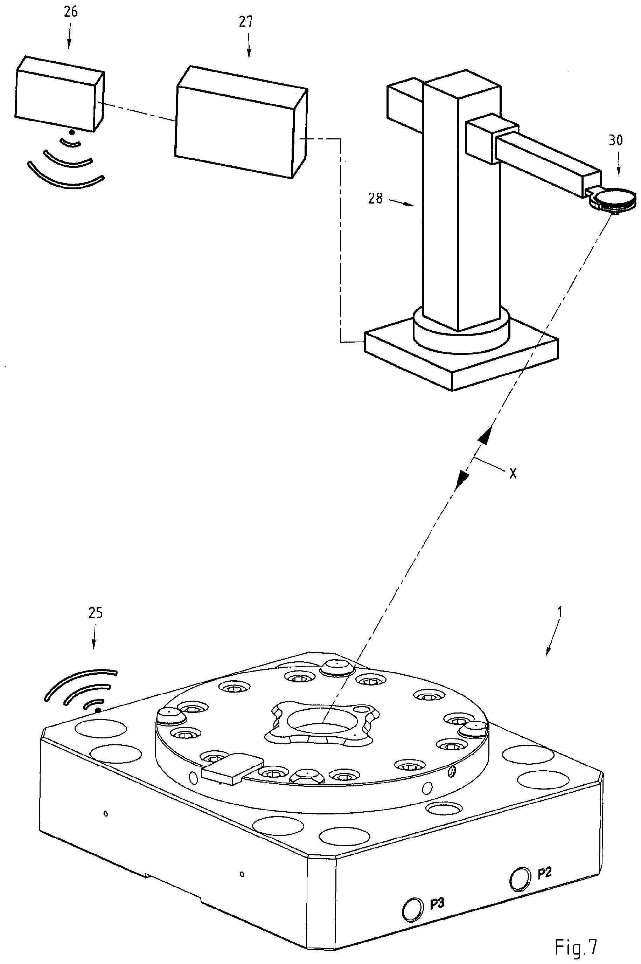

Die Fig. 7 zeigt schematisch das erfindungsgemässe Spannfutter 1 zusammen mit einzelnen Elementen/Komponenten einer Fertigungsanlage. Neben dem Spanfutter 1 sind ein Empfänger 26, ein Gateway 27 sowie ein Handlingroboter 28 dargestellt, wobei die einzelnen Elemente nicht massstabsgetreu wiedergegeben sind. Unter dem allgemein bekannten und verwendeten Fachbegriff Gateway wird eine Übergabestelle als Vermittlungsgerät, insbesondere als Vermittlungsgerät in Rechnernetzen, bezeichnet. Der Greifer des Handlingroboters 28 trägt eine schematisch dargestellte Palette 30.

Der im Spannfutter 1 untergebrachte Sender 25 übermittelt die Messdaten bzw. die an den Sensoren anstehenden Messwerte an den Empfänger 26, wie dies durch Funkwellen schematisch angedeutet ist. Der Empfänger 26 leitet die empfangenen Daten an das Gateway 27 weiter. Das Gateway 27 seinerseits ist mit dem Handlingroboter 28 verbunden. Das Gateway 27 empfängt die von der Mikroprozessorsteuerung des Senders 25 aufbereiteten Daten wie beispielsweise Futter offen, keine Palette vorhanden, Palette aufgelegt, Palette gespannt, Palette mit 10kN gespannt etc.. Aufgrund der übermittelten Daten kann das Gateway 27 dem Handlingroboter 28 einen Befehl wie beispielsweise Palette 30 an das Spannfutter 1 übergeben oder Palette aus dem Spannfutter 1 entnehmen übermittelt werden, wie dies durch eine Linie X mit Pfeilen angedeutet ist.

Sofern die Palette nicht mit einer Mindestspannkraft im Spannfutter 1 festgespannt ist, kann eine Fehlermeldung von dem Sender 25 ausgegeben werden. Alternativ kann das Gateway 27 erkennen, dass die Mindestspannkraft nicht erreicht wurde und eine Fehlermeldung ausgeben und/oder entsprechende Massnahmen einleiten.

Es versteht sich, dass die Fig. 7 lediglich eine beispielhafte Ausführung zeigt. So kann ein erfindungsgemäss gestaltetes Spannfutter praktisch in jede Fertigungsstrasse eingefügt und mit weiteren Komponenten wie beispielsweise einem Leitsystem oder einem Werkstückspeicher -Lager- oder direkt mit der Bearbeitungsmaschine vernetzt werden.

Je nach Bedarf können die ermittelten Signale auch miteinander verknüpft werden, um eine Entscheidung zu treffen. Wird beispielsweise erkannt, dass eine Palette aufliegt aber nicht festgespannt ist, so kann dem Spannfutter beispielsweise die Freigabe zum Festspannen gegeben werden. Andererseits kann dem Handlingroboter die Freigabe zum Entfernen der Palette aus dem Spannfutter erst dann erteilt werden, wenn eine Palette zwar aufliegt aber nicht bzw. nicht mehr festgespannt ist.

Jedenfalls bieten sich mit einem erfindungsgemäss gestalteten Spannfutter vielseitigste Möglichkeiten. So können neben den bereits genannten Messdaten ggf. zusätzliche Daten ermittelt werden, indem beispielsweise zusätzliche Sensoren vorgesehen werden. Beispielsweise könnte ein zusätzlicher Sensor vorgesehen werden, mittels welchem auf der Palette abgespeicherte Bearbeitungsdaten eingelesen und übermittelt werden. Ggf. könnte auch ein Sensor zum ermitteln der Form und/oder Grösse der Palette vorgesehen werden, was insbesondere bei grossen Spannsystemen mit mehreren Spannfuttern Sinn machen könnte. Die ermittelten Daten können auch auf unterschiedlichste Weise ausgewertet werden, indem beispielsweise die Anzahl der Spannvorgänge für das jeweilige Spannfutter, eine Veränderung der Spannkraft, insbesondere eine über die Zeit nachlassende Spannkraft etc. ermittelt werden. Für den zweiten und dritten Sensor können beispielsweise handelsübliche Näherungsschalter zum Einsatz kommen, beispielsweise auf mechanischer-, induktiver-, kapazitiver-, optischer-, ultraschall- oder magnetischer Basis. Als erster Sensor könnte alternativ auch ein piezoelektrischer Sensor zum Einsatz kommen.

Ggf. könnte die Palette mit einem über das Spannfutter auslesbaren Chip oder Ähnlichem versehen werden, auf dem Bearbeitungsdaten, Identifikationscodes usw. abgespeichert ist/sind.

Für die Datenübertragung wird vorzugsweise eine standardisierte Schnittstelle wie beispielsweise Bluetooth eingesetzt. Eine standardisierte Schnittstelle wie Bluetooth hat u.a. auch den Vorteil, dass die übermittelten Daten auch mit anderen Empfängern wie beispielsweise einem Mobiltelefon, einem PDA oder einem Computer problemlos empfangen und weiterverarbeitet und/oder weitergeleitet werden können.

Es versteht sich, dass das vorgängige Ausführungsbeispiel nicht als abschliessend oder umfassend zu betrachten ist. So könnte der Sensor zum Messen der Einzugskraft beispielsweise auch an anderer Stelle angeordnet werden. Wichtig für den Sensor zum Messen der Spannkraft ist lediglich, dass dieser an einer Stelle platziert ist, welche sich beim Festspannen des Spannzapfens materialelastisch deformiert. Zur Überwachung weiterer Parameter können auch noch zusätzliche Sensoren am oder im Spannfutter vorgesehen werden. Beispielsweise könnte ein Beschleunigungssensor angebracht werden, mittels welchem das Spannfutter während des Bearbeitens eines Werkstücks im Hinblick auf anstehende Erschütterungen/Vibrationen überwacht würde. Auch das Vorsehen eines Temperatursensors ist durchaus denkbar. Die Daten der weiteren Sensoren könnten ebenfalls mittels des Senders drahtlos übertragen werden.

Andererseits sind durchaus auch "einfachere" Varianten des erfindungsgemäss ausgebildeten Spannfutters denkbar, bei denen beispielsweise nur die Spannkraft überwacht wird, wobei die Spannkraft nicht zwingend absolut und mit hoher Auflösung erfasst werden muss, sondern ggf. kann es genügen, die Spannkraft in Stufen, beispielsweise in zwei bis zu zehn Stufen, zu erfassen und/oder zu überwachen und mittels des Senders zu übermitteln. Des Weiteren sind auch Varianten des Spannfutters denkbar, bei denen nur zwei Parameter erfasst werden. So sind Anwendungsfälle denkbar bei denen beispielsweise die Spannkraft erfasst und/oder überwacht wird und zudem das Aufliegen einer Palette erfassbar ist. Anstelle des Vorsehens von vier kreisrunden Z-Auflageflächen könnten natürlich auch drei oder mehr als vier Auflageflächen vorgesehen werden, wobei die Auflageflächen auch nicht zwingend kreisrund sondern beispielsweise oval ausgebildet sein könnten.

Einige Vorteile des erfindungsgemäss gestalteten Spannfutters sind nachfolgend kurz zusammengefasst:
- Es lassen sich verschiedene Parameter des Zusammenwirkens zwischen Palette und Spannfutter und/oder des Spannfutters selber und ggf. der Palette überwachen und drahtlos an eine entfernte Stelle übermitteln;
- Die übermittelten Daten können erfasst, abgespeichert und extern ausgewertet werden;
- Die Parameter können kontinuierlich überwacht werden;
- Das Messen bestimmter Parameter erhöht die Prozesssicherheit, wobei insbesondere das kontinuierliche Überwachen der Einzugskraft diesbezüglich neue Möglichkeiten eröffnet;
- Es kann erkannt werden, ob eine Palette auf das Spannfutter aufgelegt ist oder nicht;
- Es kann erkannt werden, ob die Spannvorrichtung bzw. das dem Betätigen der Spannorgane dienende Element korrekt verriegelt wurde;
- Durch die Überwachung bestimmter Parameter lässt sich die Produktivität steigern;
- Die Gefahr einer Beschädigung des Spannfutters wird reduziert;
- Veränderungen des Spannfutters über die Zeit können erkannt werden;
- Das Spannfutter lässt sich einfach in eine automatische Fertigungsanlage integrieren;
- Die gesamte Sensorik ist auf dem Spannfutter angeordnet, so dass die Paletten vergleichsweise einfach und kostengünstig gefertigt werden können. Dadurch sind die Paletten rückwärtskompatibel, d.h. es können bereits vorhandene bzw. ältere Paletten -Werkstückträger- zusammen mit einem erfindungsgemäss ausgebildeten Spannfutter verwendet werden.

## Patentansprüche

1. Spannfutter (1) zum Festspannen von mit einem Spannzapfen (31) versehenen Paletten (30), wobei das Spannfutter (1) mit einer Aufnahmeöffnung (5) für den Spannzapfen (31) und einer Spannorgane (15) aufweisenden Spannvorrichtung zum Festspannen des Spannzapfens (31) in der Aufnahmeöffnung (5) versehen ist, und wobei am Spannfutter (1) zumindest ein Sensor (9, 10, 11) angeordnet ist, mittels welchem zumindest ein Parameter des Spannfutters (1) und/oder des Zusammenwirkens zwischen Palette (30) und Spannfutter (1) und/oder der Palette (30) erfassbar ist/sind, **dadurch gekennzeichnet, dass** das Spannfutter (1) mit einem ersten Sensor (9) versehen ist, mittels welchem die auf den Spannzapfen (31) einwirkende Spannkraft ermittelbar ist, wobei der erste Sensor (9) derart ausgebildet und am Spannfutter (1) angeordnet ist, dass beim Festspannen einer Palette (30) materialelastische Verformungen des Spannfutters (1) messbar sind und wobei das Spannfutter (1) mit einem Sender (25) zur drahtlosen Übertragung von mittels des Sensors bzw. der Sensoren (9, 10, 11) ermittelten Parametern versehen ist.

2. Spannfutter nach Anspruch 1, **dadurch gekennzeichnet, dass** das Spannfutter (1) mit einem zweiten Sensor (10) versehen ist, mittels welchem das Aufliegen einer Palette (30) auf dem Spannfutter (1) erkennbar ist.

3. Spannfutter nach Anspruch 2, **dadurch gekennzeichnet, dass** der zweite Sensor (10) im Bereich der Oberseite (6) des Spannfutters (1) derart angeordnet ist, dass das Aufliegen einer Palette (30) erkennbar ist.

4. Spannfutter nach einem der vorhergehenden Ansprüche, **dadurch gekennzeichnet, dass** das Spannfutter (1) mit einem dritten Sensor (11) versehen ist, mittels welchem die Position eines der Betätigung der Spannorgane (15) dienenden Elements erkennbar ist.

5. Spannfutter nach Anspruch 4, wobei die Spannvorrichtung mit einem zwischen einer Ausgangs- und einer Verriegelungsstellung verschiebbaren Betätigungskolben (18) zum Betätigen der Spannorgane (15) versehen ist und wobei der Betätigungskolben (18) die Spannorgane (15) in der Verriegelungsstellung radial nach innen schiebt, so dass sich diese kraftschlüssig am Spannzapfen (31) anlegen, **dadurch gekennzeichnet, dass** der dritte Sensor (11) derart innerhalb des Spannfutters (1) angeordnet ist, dass die Position des sich in der Ausgangsstellung befindlichen Betätigungskolbens (18) erkennbar ist.

6. Spannfutter nach Anspruch 1, **dadurch gekennzeichnet, dass** der erste Sensor (9) ein Sensor auf der Basis von Dehnungsmesstreifen (DMS) ist.

7. Spannfutter nach Anspruch 6, **dadurch gekennzeichnet, dass** der erste Sensor (9) derart kraft- und/oder stoffschlüssig an dem Spannfutter (1) angebracht ist, dass dessen Signal im Wesentlichen proportional zur Spannkraft ist.

8. Spannfutter nach einem der Ansprüche 6 oder 7, wobei das Spannfutter(1) auf der Oberseite mit Z-Auflagen (7) für die Palette (30) versehen ist, und wobei die Z-Auflagen (7) radial ausserhalb der Aufnahmeöffnung (5) angeordnet sind, **dadurch gekennzeichnet, dass** der erste Sensor (9) in radialer Richtung zwischen einer die Z-Auflagen (7) schneidenden Kreislinie (L) und der Aufnahmeöffnung (5) angeordnet ist.

9. Spannfutter nach einem der vorhergehenden Ansprüche, **dadurch gekennzeichnet, dass** das Spannfutter (1) mit einem hohlzylindrischen Fortsatz (13) versehen ist, welcher die Aufnahmeöffnung (5) radial begrenzt, wobei der Fortsatz (13) mit radialen Bohrungen (14) versehen ist, in welchen die Spannorgane (15) in Z-Richtung form- und/oder kraftschlüssig abgestützt sind.

10. Spannfutter nach einem der vorhergehenden Ansprüche, mit einem zwischen einer Ausgangs- und einer Verriegelungsstellung verschiebbaren Betätigungskolben (18) zum Betätigen der Spannorgane (15), wobei der Betätigungskolben (18) die Spannorgane (15) in der Verriegelungsstellung radial nach innen schiebt, so dass sich diese kraftschlüssig am Spannzapfen (31) anlegen, **dadurch gekennzeichnet, dass** der Betätigungskolben (18) mittels Druckfedern (20) in die Verriegelungsstellung und pneumatisch entgegen der Kraft der Federn (20) in die Ausgangsstellung verschiebbar ist.

11. Spannfutter nach einem der vorhergehenden Ansprüche, **dadurch gekennzeichnet, dass** im Spannfutter eine Mikroprozessorsteuerung integriert ist, mittels welcher die von den Sensoren (9, 10, 11) ermittelten Daten vor der Übermittlung an den Sender (25) ausgewertet und/oder aufbereitet werden.

12. Spannfutter nach einem der vorhergehenden Ansprüche, **dadurch gekennzeichnet, dass** das Spannfutter mit einer Stromversorgung, insbesondere in der Form von Batterien oder Akkus für den Sender und den die Sensor(en) und ggf. weitere elektrische oder elektronische Komponenten, versehen ist.

## Claims

1. A clamping chuck (1) for clamping pallets (30) provided with a clamping spigot (31), wherein the clamping chuck (1) is provided with a receiving opening (5) for the clamping spigot (31) and a clamping device having clamping elements (15) for clamping the clamping spigot (31) in the receiving opening (5), and wherein at least one sensor (9, 10, 11) is arranged at the clamping chuck (1), by means of which at least one parameter of the clamping chuck (1) and/or of the interaction between pallet (30) and clamping chuck (1) and/or the pallet (30) can be detected, **characterised in that** the clamping chuck (1) is provided with a first sensor (9), by means of which the clamping force acting on the clamping spigot (31) can be ascertained, wherein the first sensor (9) is designed and arranged at the clamping chuck (1) such that, when clamping a pallet (30), material elastic deformations of the chuck (1) can be measured, and wherein the clamping chuck (1) is provided with a transmitter (25) for wirelessly transmitting parameters ascertained by means of the sensor(s) (9, 10, 11).

2. The clamping chuck according to claim 1, **characterised in that** the clamping chuck (1) is provided with a second sensor (10), by means of which the laying-on of a pallet (30) can be identified on the clamping chuck (1).

3. The clamping chuck according to claim 2, **characterised in that** the second sensor (10) is arranged in the region of the top side (6) of the clamping chuck (1) such that the laying-on of a pallet (30) can be identified.

4. The clamping chuck according to one of the preceding claims, **characterised in that** the clamping chuck (1) is provided with a third sensor (11), by means of which the position of an element serving to actuate the clamping elements (15) can be identified.

5. The clamping chuck according to claim 4, wherein the clamping device is provided with a piston (18) which can be displaced between a starting position and a locking position and which is for actuating the clamping elements (15), and wherein the piston (18) pushes the clamping elements (15) radially inwards into the locking position, with the result that these abut against the clamping spigot (31) in force-locking manner, **characterised in that** the third sensor (11) is arranged inside the clamping chuck (1) such that the position of the piston (18) in the starting position can be identified.

6. The clamping chuck according to claim 1, **characterised in that** the first sensor (9) is a strain gauge sensor (DMS).

7. The clamping chuck according to claim 6, **characterised in that** the first sensor (9) is attached to the clamping chuck (1) in force-locking and/or positive-locking manner such that the signal thereof is substantially proportional to the clamping force.

8. The clamping chuck according to one of claims 6 or 7, wherein the clamping chuck (1) is provided with Z-supports (7) for the pallet (30) on the top side, and wherein the Z-supports (7) are arranged radially outside of the receiving opening (5), **characterised in that** the first sensor (9) is arranged in radial direction between a circular line (L) cutting one of the Z-supports (7) and the receiving opening (5).

9. The clamping chuck according to one of the preceding claims, **characterised in that** the clamping chuck (1) is provided with a hollow cylindrical extension (13) which radially restricts the receiving opening (5), wherein the extension (13) is provided with radial bores (14) in which the clamping elements (15) are supported, in form-locking and/or positive-locking manner, in Z direction.

10. The clamping chuck according to one of the preceding claims, with a piston (18) which can be displaced between a starting position and a locking position and which is for actuating the clamping elements (15), and wherein the piston (18) pushes the clamping elements (15) radially inwards into the locking position, with the result that these abut against the clamping spigot (31) in force-locking manner, **characterised in that,** by means of compression springs (20), the piston (18) can be displaced into the locking position and pneumatically against the force of the springs (20) into the starting position.

11. The clamping chuck according to one of the preceding claims, **characterised in that** a microprocessor controller is integrated in the collet chuck, by means of which the data ascertained by the sensors (9, 10, 11) are evaluated and/or processed before being transmitted to the transmitter (25).

12. The clamping chuck according to one of the preceding claims, **characterised in that** the collet chuck is provided with a power supply, in particular in the form of batteries or accumulators for the transmitter and the sensor(s) and optionally further electric or electronic components.

## Revendications

1. Mandrin (1) destiné au serrage de palettes (30) pourvues de tenons de serrage (31), le mandrin (1) étant pourvu d'une ouverture de réception (5) pour le tenon de serrage (31) et d'un dispositif de serrage présentant des organes de serrage (15) pour serrer le tenon de serrage (31) dans l'ouverture de réception (5), au moins un capteur (9, 10, 11) étant disposé sur le mandrin (1), au moyen duquel au moins un paramètre du mandrin (1) et/ou de l'interaction entre la palette (30) et le mandrin (1) et/ou de la palette (30) peut être détecté, **caractérisé en ce que** le mandrin (1) est pourvu d'un premier capteur (9), au moyen duquel la force de serrage exercée sur le tenon de serrage peut être déterminée, le premier capteur (9) étant conçu et disposé sur le mandrin (1) de sorte que lors du serrage d'une palette (30) des déformations élastiques du matériau du mandrin (1) peuvent être mesurées et le mandrin (1) étant muni d'un émetteur (25) pour la transmission sans fil de paramètres déterminés au moyen du capteur, c'est-à-dire des capteurs (9, 10 ,11).

2. Mandrin suivant la revendication 1, **caractérisé en ce que** le mandrin (1) est pourvu d'un deuxième capteur (10) permettant de reconnaître qu'une palette (30) est en appui sur le mandrin.

3. Mandrin suivant la revendication 2, **caractérisé en ce que** le deuxième capteur (10) est disposé au niveau de la partie supérieure (6) du mandrin (1) de sorte à permettre la reconnaissance d'une palette en appui.

4. Mandrin suivant une des revendications précédentes, **caractérisé en ce que** le mandrin (1) est pourvu d'un troisième capteur (11), au moyen duquel la position d'un élément servant à l'actionnement des organes de serrage (15) est reconnaissable.

5. Mandrin suivant la revendication 4, dont le dispositif de serrage étant pourvu d'un piston d'actionnement (18) déplaçable entre une position de départ et une position de verrouillage pour actionner les organes de serrage (15) et le piston d'actionnement (18) poussant les organes de serrage (15) radialement vers l'intérieur en position de verrouillage, de sorte que ceux-ci s'appuient par adhérence sur le tenon de serrage (31), **caractérisé en ce que** le troisième capteur (11) est disposé à l'intérieur du mandrin (1) de sorte que la position du piston d'actionnement (18) se trouvant dans la position de départ est reconnaissable.

6. Mandrin suivant la revendication 1, **caractérisé en ce que** le premier capteur (9) est un capteur à base de jauges de contrainte (DMS).

7. Mandrin suivant la revendication 6, **caractérisé en ce que** le premier capteur (9) est monté sur le mandrin (1) par adhérence et/ou par liaison de matière de sorte que le signal de celui-ci est sensiblement proportionnel à la force de serrage.

8. Mandrin suivant une des revendication 6 ou 7, ledit mandrin (1) étant sur sa partie supérieure pourvu d'appuis Z (7) pour la palette (30) et les appuis Z (7) étant disposés radialement à l'extérieur de l'ouverture de serrage (5), **caractérisé en ce que** le premier capteur (9) est disposé dans un sens radial entre une ligne circulaire (L) coupant les appuis Z et l'ouverture de réception (5).

9. Mandrin suivant une des revendications précédentes, **caractérisé en ce que** le mandrin (1) est pourvu d'un prolongement cylindrique creux (13) qui limite radialement l'ouverture de réception (5), le prolongement (13) étant pourvu d'alésages radiaux (14), dans lesquels les organes de serrage (15) prennent appui par complémentarité et/ou par adhérence.

10. Mandrin suivant une des revendications précédentes avec un piston d'actionnement (18) déplaçable entre une position de départ et une position de verrouillage pour actionner les organes de serrage (15), le piston d'actionnement (18) poussant les organes de serrage (15) radialement vers l'intérieur en position de verrouillage de sorte que ceux-ci prennent appui par adhérence sur le tenon de serrage (31), **caractérisé en ce que** le piston d'actionnement (18) peut être déplacé au moyen de ressorts de compression (20) en position de verrouillage et pneumatiquement à l'encontre de la force des ressorts (20) en position de départ.

11. Mandrin suivant une des revendications précédentes, **caractérisé en ce qu'**une commande à microprocesseur est intégrée dans le mandrin, au moyen de laquelle les données déterminées par les capteurs (9, 10, 11) sont évaluées et/ou préparées préalablement à la transmission à l'émetteur (25).

12. Mandrin suivant une des revendications précédentes, **caractérisé en ce que** le mandrin est pourvu d'une alimentation en courant, en particulier sous la forme de piles ou d'accumulateurs pour l'émetteur et le(s) capteur(s) et le cas échéant pour d'autres composants électriques ou électroniques.
